# EUROPEAN PATENT SPECIFICATION

(11) **EP 4 103 365 B1**
(45) Date of publication and mention of the grant of the patent: **02.04.2025**
(21) Application number: 21753487.4
(22) Date of filing: 15.02.2021
(51) Int. Cl.: G05D 1/00, B25J 11/00, H01Q 1/22, H01Q 1/24, H01Q 1/32, H01Q 3/30, H01Q 21/06

(54) **APPARATUS, SYSTEM, AND METHOD FOR A PHASED ARRAY ANTENNA FOR AN AUTONOMOUS ROBOT**
VORRICHTUNG, SYSTEM UND VERFAHREN FÜR EINE PHASENGESTEUERTE GRUPPENANTENNE FÜR EINEN AUTONOMEN ROBOTER
APPAREIL, SYSTÈME ET PROCÉDÉ POUR UNE ANTENNE À RÉSEAU À ÉLÉMENTS EN PHASE POUR UN ROBOT AUTONOME

(30) Priority: 13.02.2020 US 202062976044 P
(43) Date of publication of application: 21.12.2022
(73) Proprietor: Jabil Inc., St. Petersburg, Florida 33716 (US)
(72) Inventor: WABLE, Girish Satish, St. Petersburg, Florida 33716 (US); TIMMINS, Ian, St. Petersburg, Florida 33716 (US); RICHARDS, Nathaniel Patrick, St. Petersburg, Florida 33716 (US); JONES, Christopher, St. Petersburg, Florida 33716 (US)
(74) Representative: Gulde & Partner
(86) International application number: PCT/US2021/018125
(87) International publication number: WO 2021/163667

(56) References cited:
- WO-A1-2019/191029
- KR-A- 20200 015 506
- US-A1- 2015 158 182
- US-A1- 2017 225 336
- US-A1- 2017 234 961
- US-A1- 2019 252 925
- US-A1- 2020 039 081
- HOVSTEIN VEGARD E.; SAEGROV ATLE; JOHANSEN TOR A.: "Experiences with coastal and maritime UAS BLOS operation with phased-array antenna digital payload data link", 2014 INTERNATIONAL CONFERENCE ON UNMANNED AIRCRAFT SYSTEMS (ICUAS), IEEE, 27 May 2014 (2014-05-27), pages 261 - 266, XP032610481, DOI: 10.1109/ICUAS.2014.6842264

## Description

### Field of the Disclosure

The disclosure relates generally to robotics, and, more particularly, to an apparatus, system, and method of a phased array antenna for an autonomous robot.

### Background of the Disclosure

Indoor and outdoor autonomous vehicles are a category of robotics that is quickly advancing. In particular, indoor robotic vehicles are now available for a variety of purposes, including but not limited to cleaning, patrolling and inspecting, security, inventory management, patient movement, wheel chairs, personal assistants, item transport, research, hazardous materials handling, hazardous condition assessment, and so on.

However, an autonomous mobile robot that operates in an indoor environment and which is of any significant height, such as a robot that is a meter or more in height, presents particular difficulties in navigation. This is due to the number of obstacles that may be encountered at various different altitudes, and due to what may be a significant distance between obstacle sensors on the vehicle and the floor, and/or between the sensors on the mast of the robot and any beacons that "highlight" and sense for the robot along its travel path.

These difficulties are yet further exacerbated when the robot must operate around untrained or inattentive personnel, or around the general public, as refined obstacle handling becomes a greater necessity for safety reasons in such environments. When using a robot to perform situational awareness functions within such a defined space (such as a retail store), the robot often must use the aforementioned remote beacon sensors, as well as monitoring safety sensors.

Thus, to simplify processing for the robot, the beacon sensors may be polled as the robot travels around the confined space, such as in order to enable safe navigation. Such remote sensors may also provide various additional information relevant to the confined space, such as including stock levels within, temperature of, or humidity of a controlled environment.

A communication gateway may then be used to update the numericals on a display, such as may be tagged to an item, or the information inside the memory locations of or associated with products, i.e., prices on the shelves. However, in many cases, the RF signal propagating between the robot and the sensor, and/or between the sensor and the communications gateway, experiences too much loss to properly convey the sensed information. This signal loss can be for a number of reasons, but typically it is because of the distance between the robot and the sensor, or the location of the sensor in an environment that inhibits RF propagation, such as a metal enclosure (i.e., in refrigeration unit), or on a package on the top or bottom shelf or otherwise at the most remote locations, such as in a deep corner, inside a warehouse, in a hospital, in a pharmacy, in an aisle, or in a cubby, by way of non-limiting example.

In the case of signal loss, the use of a high gain antenna can be employed to improve the RF reception from a beacon style sensor. This improves the successfully received data percentage for sensors located at either long distances or in various inhibiting enclosures.

However, high gain antennas (or large antenna array structures) made with traditional methods is typically complex and expensive. This cost prohibitive-ness is the reason that the use of such antennas is very limited today.

Cost-prohibitiveness and ineffectiveness is also a drawback to various other known antenna methods. Such other known methods may include wires, copper PCB antennas, metal domes or cones, wands, or the like.

Mobile robots using conventional antennas are disclosed in US 2017/225336 A1.

### SUMMARY OF THE DISCLOSURE

The invention is defined by the appended set of claims. The description that follows is subjected to this limitation. Any disclosure lying outside the scope of said claims is only intended for illustrative as well as comparative purposes.

The disclosure is and includes at least an apparatus, system and method of operating an autonomous mobile robot having a height of at least one meter. The apparatus, system and method may include a mobile robot body; at least two phased array antennas associated with the mobile body, wherein the phased array antennas enable wireless communication between on-board features of the mobile robot, including at least mobility hardware proximate to a base of the mobile robot body, and off-board sensors related to at least navigation of the mobility hardware; and a processing system communicative with the on-board features and the off-board sensors via intercommunication with the phased antennas, and comprising non-transitory computing code which, when executed by at least one processor associated with the processing system.

The processing system causes to be executed the steps of: navigating the mobile robot along a predetermined pathway, subject to obstacle avoidance; and executing communication protocols between the on-board features and the off-board sensors over the phased array antennas to allow for the navigating.

### BRIEF DESCRIPTION OF THE DRAWINGS

The disclosure is illustrated by way of example and not limitation in the accompanying drawings, in which like references indicate similar elements, and in which:
FIG. 1 illustrates a mobile robot operating in a retail environment;
FIG. 2 illustrates an exemplary robot in an operating environment;
FIGs. 3 illustrate exemplary aspects for an autonomous robot;
FIG. 4 illustrates exemplary aspects for an autonomous robot;
FIG. 5 illustrates exemplary aspects for an autonomous robot;
FIG. 6 illustrates exemplary aspects for an autonomous robot;
FIG. 7 illustrates exemplary aspects for an autonomous robot;
FIG. 8 illustrates exemplary aspects for an autonomous robot;
FIG. 9 illustrates exemplary aspects for an autonomous robot;
FIG. 10 illustrates exemplary aspects for an autonomous robot; and
FIG. 11 is a schematic diagram illustrating an exemplary processing system.

### DETAILED DESCRIPTION

The embodiments may provide a mobile robot having a substantially 360 degree field of view (FoV) for obstacle assessment and which senses and follows a predetermined travel path. The embodiments provide high gain phased array antennas for improving RF communications between such a robot and a sensor, such as a beacons sensor for the predetermined travel path, particularly, for example, in a retail space environment. The communications protocol for the sensor system may vary, such as using Bluetooth or wireless Ethernet; and the type of off-board sensor may also vary, such as including navigational, environmental, safety, light, or depth sensors, by way of example.

The phased array antenna may be of any of various sizes and frequencies. The size and/or frequency choice may depend on how much contribution to the link budget is required of the antenna, such as in a circumstance of extreme distance or RF enclosure loss.

Regarding construction, the phased array antenna may be, for example, a rigid or flexible printed circuit board with plated-up copper. The antenna may also be realized on a rigid or flexible substrate (polyamide, PET, paper, etc., or directly on the plastic enclosure), such as with conductive ink (silver, copper or other blends of materials). For example, the phased array section may be interconnected to each other and to the main processor board using conductive traces printed on the shared substrate in between the phase array.

The requisite traces on the substrate may be, for example, printed or deposited via known methodologies. Likewise, the phased array antennas may be manufactured by subtractive processes, such as by plating on rigid fr4 or flexible polyamide. Yet further, the phase array antenna and its associated circuits may be made on flexible substrates by additive processes such as printing (screen, gravure, inkjet, flexo, etc.), dispensing or coating (jetting, slot die, spray, etc.), by way of non-limiting example.

As detailed, the printed phased array antenna may be a planar structure. This planar/flexible planar structure may be mounted on a metal mast, or behind a piece of plastic packaging, by way of non-limiting example, such as to conceal its implementation.

Alternatively, the disclosed antenna may be conformed to the shape of the robot's enclosure. Whether planar or conformed, the electronics components, such as for the power, sensors, communications, and/or driver circuits may be distinct from or integrated to the substrates on which the phase array antennas reside. For example, antennas of various designs, such as 5G, LTE, WiFi, Bluetooth/BLE, LORA, and/or the like may be integrated on the same substrate.

As discussed throughout, one disclosed robotic, namely a retail robot, may travel a pathway within a retail space. While travelling, the robot may poll beacon sensors for various data, collecting the cumulative data from the maximum number of sensors on the predetermined travel pathway.

The disclosed high gain antenna may avoid increased operational time for the robot, such as wherein the robot must spend more time slowed or stalled in a location listening for a beacon sensor. The disclosed antenna may also improve the travel of the robot by allowing it to move into a closer proximity of known sensor locations to reduce path loss from the link budget.

Of course, while the embodiments are provided by way of illustration using a retail robot, the disclosed antennas may be employed in a variety of use contexts. Such use contexts may include, by way of non-limiting example, machine-to-machine communications, such as in an industrial setting; conflict or threat detection; connected healthcare, such as in hospitals or homes; home automation; and theme parks, such as to provide an improved guest experience.

The embodiments provide increased wireless coverage without increasing weight via distributed PCB antennas or a large metal inserts or wands. The embodiments also provide lower cost; low power; multiple distributed radios; and longer battery life, among other advantages over the known art.

The embodiments enable radio communications to reach every item on every shelf without the need for fixed large metal cone antenna, without need of powerful radios, and without the need for multiple PCB antennas on the robot's tower. The need for antennas and connective wiring harnesses is also reduced. Accordingly, the assembly steps, the bill of parts, and the weight of the robot is consequently reduced.

Moreover, and as referenced above, the embodiments also allow the distributed integration of SMT components, such as contextual sensors, on the same structures. This improves signal performance by localized tuning without line loss and signal degradation.

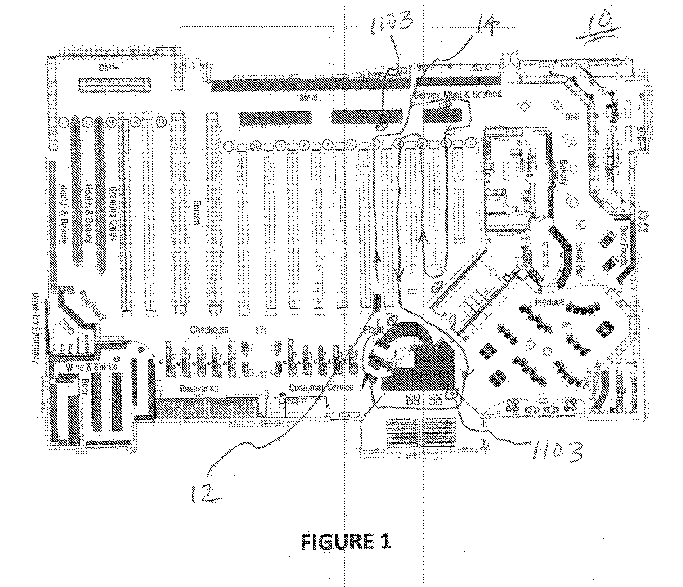

Figure 1 is an illustration of an exemplary retail space 10 that may be patrolled by a robot 12 according to the embodiments. The robot 12 may traverse predetermined and pre-programmed portions of the mapped space 14 according to its programming, such as traversing the perimeter of the space; or each aisle in the space; or the least secure areas of the space; or only the aisles in certain departments of the space, for example. During its travels, on-board sensors may collect data from, for example, beacons 1103 or other features within the patrolled environment, and this information may be communicated wirelessly to a communications hub. Similarly, communications with beacons distinct from the robot may provide the travel path through the predetermined environment to be traversed, and these communications from the robot to and from the beacons around the environment may also occur wirelessly.

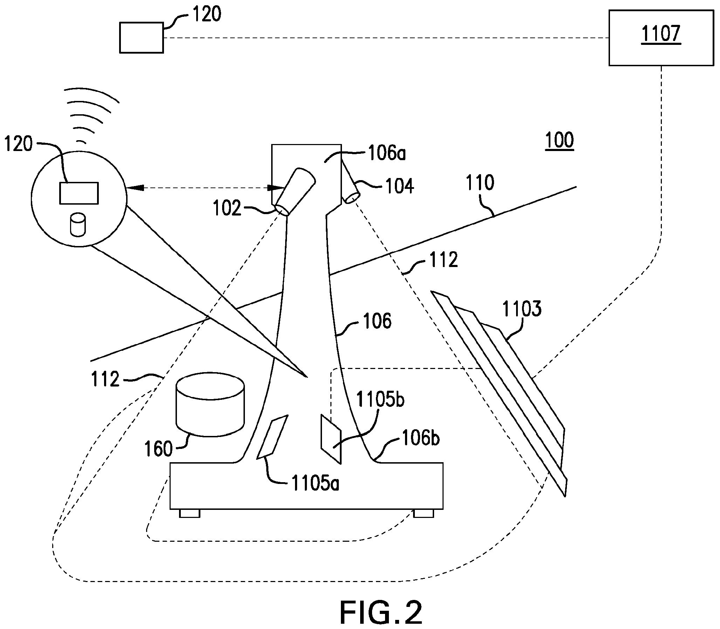

Figure 2 illustrates a robotic system 100 according to embodiments. As shown, two or more sensors 102, 104 may be mounted substantially proximate to the top 106a of a mobile robot body 106. Of course, in some embodiments, sensing may be provided by multiple other sensors at particular heights or angles other than those specifically detailed herein, as will be understood to one of ordinary skill in the art in light of the discussion herein.

The sensors 102, 104 may be aimed, such as prior to active use, substantially vertically, or at an angle such as in a range of 10 degrees to 45 degrees from vertical, toward the operating space for the robot. The sensing 112 may provide information necessary to the software, firmware, and/or hardware which is executed by the computer processing system 120 (such as upon execution of code stored in the non-transitory computing memory), such as obstacles 160 in the path guided by beacons 1103 according to processing system(s) 120, 1107, to carry out the function of the robotic system 100.

The robotic system 100 may additionally include off-board sensors 1103, such as pathway beacons, to provide information to the robot. This information may include, for example, literal distance from an individual beacon, or a triangulated distance from multiple beacons, such as may allow for navigation of the robot. Sensor 1103 may also include or provide other information, such as inventory information.

The information from off-board sensors 1103 (and/or "pings" or alarms provided therefrom) may be received by the robot using one or more on-board antennas 1105a, b. These antennas may also be used to send information outwardly from the robot, such as to off-board sensors 1103 and/or to offboard processing system 1107.

Accordingly, the mobile robot 106 may include one or more processing systems 120 onboard the robot 106, and/or one or more off-board processing systems/communication hubs 1107, and these processing systems 120, 1107 may have associated therewith one or more computing memories having associated therewith non-transitory computing code which, when executed by the one or more processing systems, causes to be provided the algorithms, calculations, comparisons and relations discussed throughout. The processing system 120/1107 onboard the robot may additionally include communication capabilities for the transceiving of communications to and from offboard the robot, such as using the disclosed antennas. By way of example, such communication capabilities may include near field communications (NFC), Bluetooth, local area network (such as WiFi), wide area network, cellular network, infrared, or other communication methodologies. It will be appreciated that the onboard processing system 120/1107 of the robot 106, to the extent the aforementioned communication capabilities are provided, may handle all principal processing, such as application of the algorithms, calculations, comparisons and relations discussed throughout, or may share principal processing at least partially or fully offboard the robot 106, without departing from the disclosure.

In the illustration of Figure 2, the robot 12 may travel the retail space 10 of Figure 1. The antennas 1105 may communicate with the beacon sensors 1103 referenced in Figure 1, which may provide a variety of information to the robot, including the travel path. These beacons 1103 may be placed periodically or sporadically, but not continuously, around the retail (or other) space, and may be out in the open or in more blocked or hidden location. Additionally, these antennas may communicate with the communication hub or hubs 1107.

As shown, these antennas may be housed on or within the base region 106b of the mast of the robot shown. Of course, the skilled artisan will appreciate that other housing locations may be used without departing from the disclosure. The antennas may be formed to the housing of the robot mast base, or may be flat, as discussed above. In the known art, these antennas would typically comprise low-gain OEM antennas, which typically have a gain of around unity.

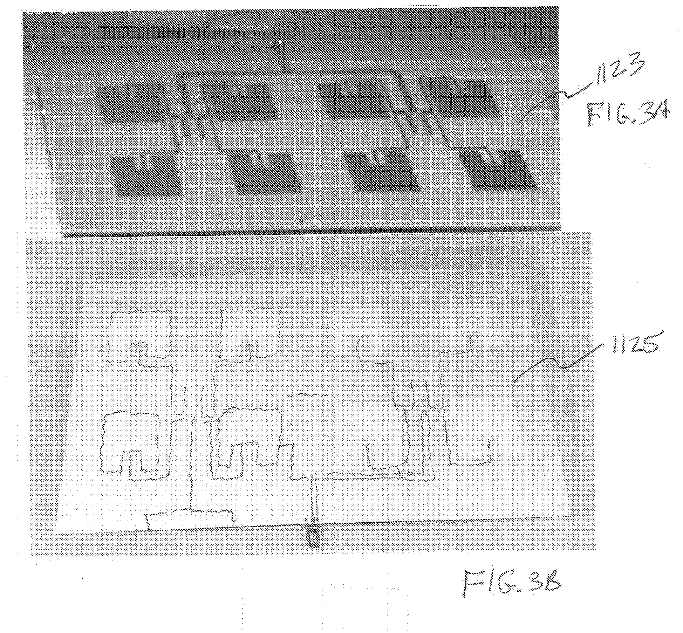

Figures 3A and B illustrate high gain phased array antennas for use as the antennas 1105 in the robot 100 illustration of Figure 2. These antennas would be employed in place of the low-gain OEM antennas of the known art referenced above.

The illustration of Figure 3A is a rigid PCB phased array antenna 1123 made from FR4 and copper traces. The illustration of Figure 3B is a flexible phased array antenna 1125 made using a polyethylene terephthalate (PET) substrate and conductive ink. In both of the embodiments of Figures 3, the gain of the phased array antennas may be on the order of about 10dB, by way of example.

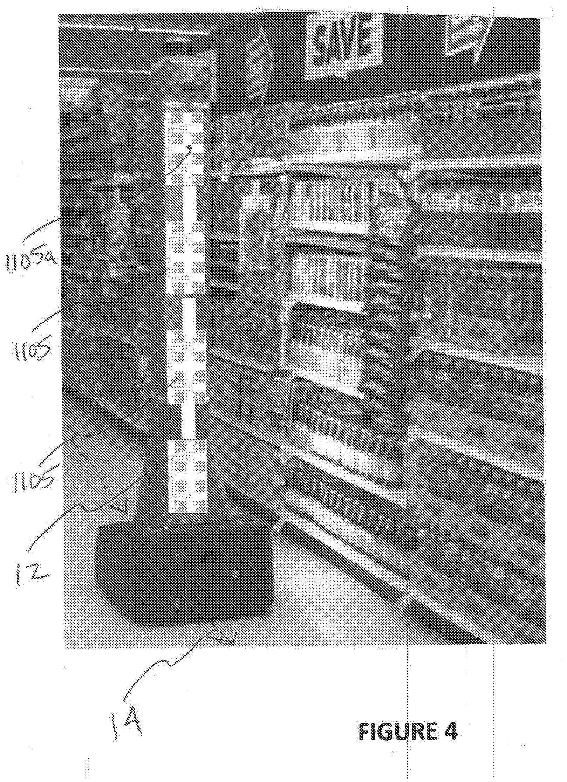

Figure 4 is an exemplary illustration of a robot 12 following a travel path 14 in a retail environment, such as along one of the aisles illustrated in Figure 1. In the illustration, multiple phased array antennas 1105, interconnected by traces on a single substrate or multiple substrates 1105a, are mounted on the robot housing. It should be noted that, although the antenna arrays 1105 are shown in Figure 4 as being mounted on a single face of the housing, the array(s) may wrap around multiple faces of the robot housing, or around the the entire strucuture, for example.

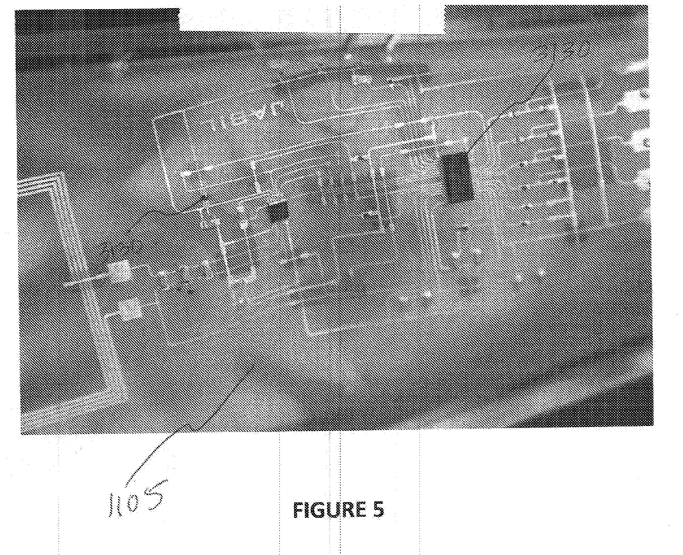

As referenced above, the antenna 1105 and/or its electronics substrate may be mounted or formed on or within the robot and/or its housing, and may be printed, deposited, and/or formed by other additive or subtractive processes. For example, Figure 5 illustrates a printed antenna 1105, and its associated circuitry, for SMT component 3130 attachment on the same substrate.

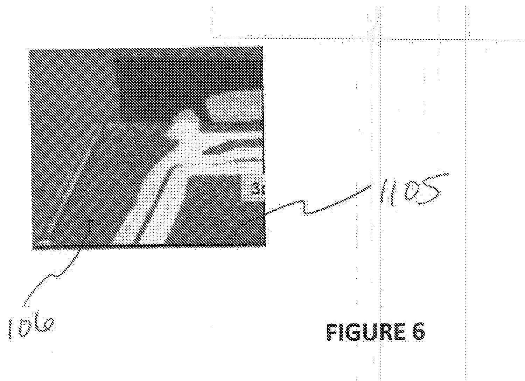

Figure 6 illustrates an example of a 3D printed antenna array. The printed antenna array 1105 of Figure 6 is shown printed directly on the surface of the robot housing/enclosure 106, although those skilled in the art will appreciate that the antenna array may be printed on a separate substrate as discussed herein throughout.

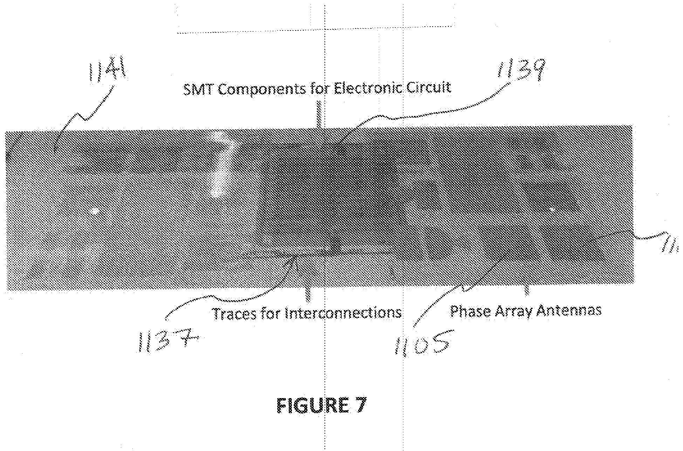

Figure 7 illustrates a phase array antenna 1105, with interconnections 1137 and SMT components 1139 of an electronic circuit, all on a single substrate 1141. This type of structured arrays may be repeated over the entire area of the robot enclosure 106, as is referenced herein above in relation to Figure 6.

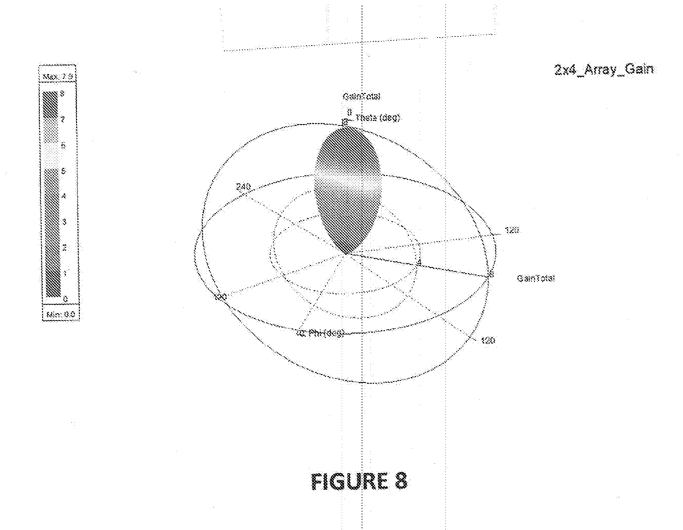

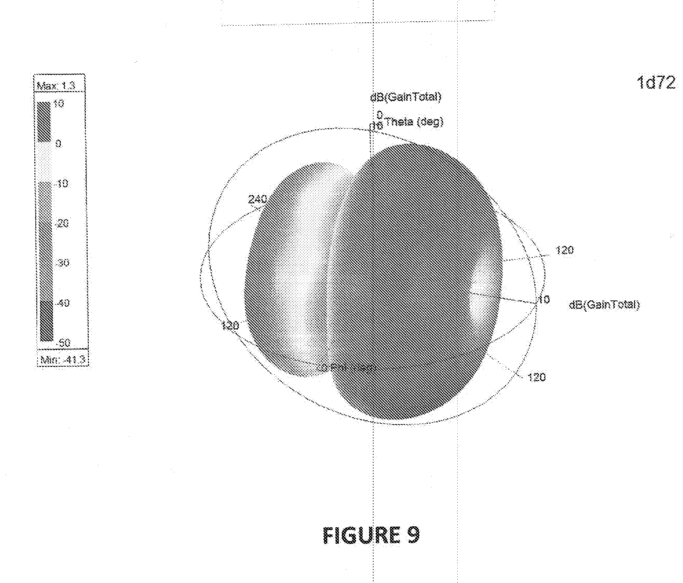

Figure 8 is a 3D Radiation plot of a high gain phased array antenna in accordance with the embodiments. By way of comparative example, Figure 9 illustrates a 3D Radiation plot of a typical low-gain whip antenna of the known art.

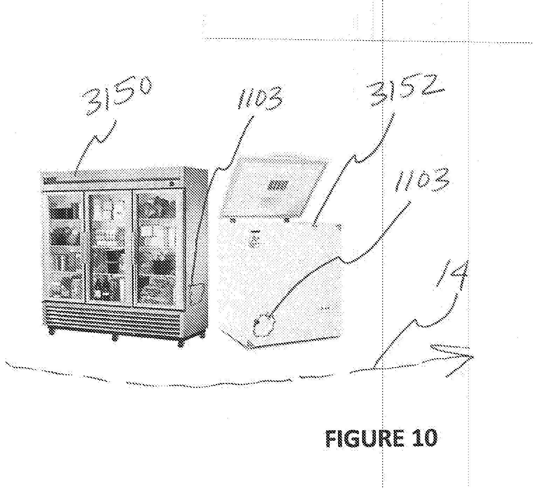

Figure 10 illustrates common structures in a retail space in relation to which sensors 1103 may be deployed, but which present a challenging environment for RF propagation to indicate path 14. This difficulty in RF communications may be due to the thickness or composition of the container, shelf, or appliance associated with or containing the sensor, for example. By way of example, in the illustration of Figure 10, the refrigeration unit 3150 may be formed of metal and glass that may impede RF signaling, and the freezer 3152 may include thick insulation that may do the same.

It will be appreciated, for each of the foregoing instances, that the assessment by the processing system, and the correspondent reaction from the robot, may vary based on the robot's capabilities. By way of non-limiting example, a robot capable of climbing or descending steps may react or be reacted to proceed to continue moving.

In an additional example and as discussed above, a floor slope may appear as an obstacle. However, because of the disclosed travel template filtering, governing path planning software may be aware of the slope of the plane proximate to a particular beacon, and of the slope triangulated to a different travel path between various beacons. Thereby, if it is determined that the slope in one area exceeds the safety limits for the capabilities of that particular robot, the robot may be re-routed. Of course, the skilled artisan will appreciate that a deviation from a typical path among beacons may occur for any of a variety of reasons, such as a safety alert from another sensor of the robot, such as an indication from an onboard camera that an obstacle is in the typical pathway.

In addition to navigation, emergency stops, and the like, the detailed observations of all obstacles near the robot, as referenced above, may enable highprecision maneuvers that would generally be infeasible using prior state of the art localization methods and on-board sensors or typical off-board sensors engaged in low-gain/impeded communications with the robot via traditional antennas. Similarly, the disclosed antenna embodiments may allow the mobile robot to highly precisely engage a parking place or a docking station, by way of example, due, in part, to the high volume data made available by the disclosed high gain phased array antenna.

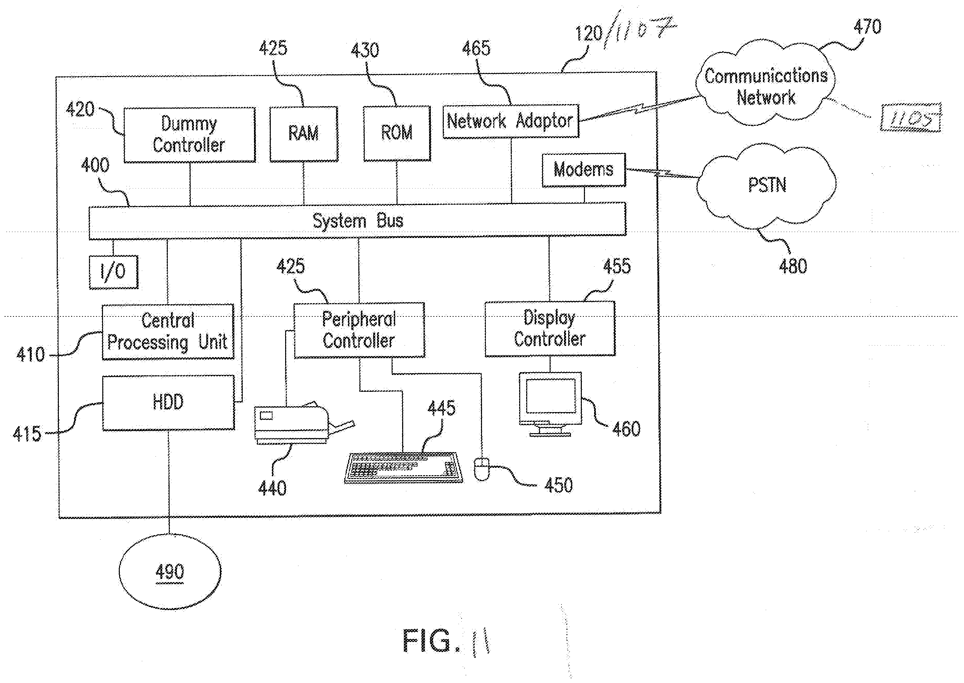

Figure 11 depicts an exemplary computer processing system 120/1107 for use in association with the embodiments, by way of non-limiting example. Processing system 120/1107 is capable of executing software, such as an operating system (OS) and one or more computing algorithms/applications 490 such as those discussed throughout. The operation of exemplary processing system 120/1107 is controlled primarily by the computer readable instructions/code discussed throughout, such as instructions stored in a computer readable storage medium, such as hard disk drive (HDD) 415, optical disk (not shown) such as a CD or DVD, solid state drive (not shown) such as a USB "thumb drive," or the like. Such instructions may be executed within central processing unit (CPU) 410 to cause system 120/1107 to perform the disclosed operations, comparisons and calculations. In many known computer servers, workstations, personal computers, and the like, CPU 410 is implemented in an integrated circuit called a processor.

It is appreciated that, although exemplary processing system 120/1107 is shown to comprise a single CPU 410, such description is merely illustrative, as processing system 120/1107 may comprise a plurality of CPUs 410. Additionally, system 120/1107 may exploit the resources of remote CPUs (not shown) through communications network 470 or some other data communications means 480, as discussed above.

In operation, CPU 410 fetches, decodes, and executes instructions from a computer readable storage medium such as HDD 415. Such instructions may be included in software such as an operating system (OS), executable programs/applications 490, and the like. Information, such as computer instructions and other computer readable data, is transferred between components of system 120/1107 via the system's main data-transfer path. The main data-transfer path may use a system bus architecture 405, although other computer architectures (not shown) can be used, such as architectures using serializers and deserializers and crossbar switches to communicate data between devices over serial communication paths. System bus 405 may include data lines for sending data, address lines for sending addresses, and control lines for sending interrupts and for operating the system bus. Some busses provide bus arbitration that regulates access to the bus by extension cards, controllers, and CPU 410.

Memory devices coupled to system bus 405 may include random access memory (RAM) 425 and/or read only memory (ROM) 430, by way of example. Such memories include circuitry that allows information to be stored and retrieved. ROMs 430 generally contain stored data that cannot be modified. Data stored in RAM 425 can be read or changed by CPU 410 or other hardware devices. Access to RAM 425 and/or ROM 430 may be controlled by memory controller 420. Memory controller 420 may provide an address translation function that translates virtual addresses into physical addresses as instructions are executed.

In addition, processing system 120 may contain peripheral communications controller and bus 435, which is responsible for communicating instructions from CPU 410 to, and/or receiving data from, peripherals, such as peripherals 440, 445, and 450, which may include printers, keyboards, and/or the elements discussed herein throughout. An example of a peripheral bus is the Peripheral Component Interconnect (PCI) bus that is well known in the pertinent art.

Display 460, which is controlled by display controller 455, may be used to display visual output and/or presentation data generated by or at the request of processing system 120/1107, responsive to operation of the aforementioned computing programs/applications 490. Such visual output may include text, graphics, animated graphics, and/or video, for example. Display 460 may be implemented with a CRT-based video display, an LCD or LED-based display, a gas plasma-based flat-panel display, a touchpanel display, or the like. Display controller 455 includes electronic components required to generate a video signal that is sent to display 460.

Further, processing system 120/1107 may contain network adapter 465 which may be used to couple system 120/1107 to external communication network 470, which may include or provide access to the Internet, an intranet, an extranet, or the like. Communications network 470 may provide access for processing system 120/1107 with means of communicating and transferring software and information electronically. Additionally, communications network 470 may provide for distributed processing, which involves several computers and the sharing of workloads or cooperative efforts in performing a task, as discussed above. Network adaptor 465 may communicate to and from network 470 using any available wired or wireless technologies. Such technologies may include, by way of non-limiting example, cellular, Wi-Fi, Bluetooth, infrared, or the like.

## Claims

1. An autonomous mobile robot (102), comprising:
a mobile robot body (106);
**characterized in that** the robot (102) comprises:
at least two phased array antennas (1105, 1105a, 1105b) associated with the mobile body (106), wherein the phased array antennas (1105, 1105a, 1105b) enable wireless communication between on-board features of the mobile robot (102), including at least mobility hardware proximate to a base (106b) of the mobile robot body (106), and offboard sensors (1103) related to at least navigation of the mobility hardware; and
a processing system (120, 1107) communicative with the on-board features and the off-board sensors (1103) via intercommunication over the at least two phased array antennas, and comprising non-transitory computing code which, when executed by at least one processor associated with the processing system (120, 1107), causes to be executed the steps of:
navigating the mobile robot (102) along a predetermined pathway, subject to obstacle avoidance, by selectively actuating the mobility hardware; and
executing communication protocols between the on-board features and the off-board sensors (1103) over the phased array antennas (1105, 1105a, 1105b) to allow for the navigating.

2. The robot (102) of claim 1, wherein the mobile robot body (106) comprises a housing.

3. The robot (102) of claim 1, wherein the association of the phased array antennas (1105, 1105a, 1105b) comprises association inside the mobile robot body housing.

4. The robot (102) of claim 1, wherein the association of the phased array antennas (1105, 1105a, 1105b) comprises a housing on an outer face of the mobile robot body housing.

5. The robot (102) of claim 1, wherein the off-board sensors (1103) comprise beacon sensors.

6. The robot (102) of claim 1, wherein the phased array antennas (1105, 1105a, 1105b) comprise printed traces.

7. The robot (102) of claim 1, wherein the phased array antennas (1105, 1105a, 1105b) comprise subtractively processed traces.

8. The robot (102) of claim 1, wherein the phased array antennas (1105, 1105a, 1105b) comprise a substrate (1141).

9. The robot (102) of claim 8, wherein the substrate (1141) is flexible.

10. The robot (102) of claim 1, wherein the processing system (120) resides within the mobile robot body (106).

11. The robot (102) of claim 1, wherein the processing system (1107) resides offboard the mobile robot (102).

12. The robot (102) of claim 1, wherein the phased array antennas (1105, 1105a, 1105b) comprise wifi antennas.

13. The robot (102) of claim 1, wherein the phased array antennas (1105, 1105a, 1105b) comprise Bluetooth antennas.

14. The robot (102) of claim 1, wherein the phased array antennas (1105, 1105a, 1105b) comprise cellular antennas.

15. The robot (102) of claim 1, wherein the robot body (106) includes a mast of at least 1 meter in height.

## Patentansprüche

1. Autonomer mobiler Roboter (102), umfassend:
einen mobilen Roboterkörper (106);
**dadurch gekennzeichnet, dass** der Roboter (102) Folgendes umfasst:
wenigstens zwei phasengesteuerte Gruppenantennen (1105, 1105a, 1105b), die dem mobilen Körper (106) zugeordnet sind, wobei die phasengesteuerten Gruppenantennen (1105, 1105a, 1105b) eine drahtlose Kommunikation zwischen On-Board-Funktionen des mobilen Roboters (102), die wenigstens Mobilitätshardware in der Nähe einer Basis (106b) des mobilen Roboterkörpers (106) umfassen, und Off-Board-Sensoren (1103) ermöglichen, die wenigstens mit der Navigation der Mobilitätshardware zusammenhängen; und
ein Verarbeitungssystem (120, 1107), das mit den On-Board-Funktionen und den Off-Board-Sensoren (1103) mittels Interkommunikation über die wenigstens zwei phasengesteuerten Gruppenantennen kommuniziert und einen nicht-transitorischen Rechencode umfasst, der, wenn er von wenigstens einem dem Verarbeitungssystem (120, 1107) zugeordneten Prozessor ausgeführt wird, die Ausführung der folgenden Schritte bewirkt:
Navigieren des mobilen Roboters (102) entlang eines vorgegebenen Pfads, vorbehaltlich der Vermeidung von Hindernissen, durch selektives Betätigen der Mobilitätshardware; und
Ausführen von Kommunikationsprotokollen zwischen den On-Board-Funktionen und den OffBoard-Sensoren (1103) über die phasengesteuerten Gruppenantennen (1105, 1105a, 1105b), um das Navigieren zu ermöglichen.

2. Roboter (102) nach Anspruch 1, wobei der mobile Roboterkörper (106) ein Gehäuse umfasst.

3. Roboter (102) nach Anspruch 1, wobei die Zuordnung der phasengesteuerten Gruppenantennen (1105, 1105a, 1105b) die Zuordnung innerhalb des Gehäuses des mobilen Roboterkörpers umfasst.

4. Roboter (102) nach Anspruch 1, wobei die Zuordnung der phasengesteuerten Gruppenantennen (1105, 1105a, 1105b) ein Gehäuse an einer Außenfläche des Gehäuses des mobilen Roboterkörpers umfasst.

5. Roboter (102) nach Anspruch 1, wobei die Off-Board-Sensoren (1103) Bakensensoren umfassen.

6. Roboter (102) nach Anspruch 1, wobei die phasengesteuerten Gruppenantennen (1105, 1105a, 1105b) gedruckte Bahnen umfassen.

7. Roboter (102) nach Anspruch 1, wobei die phasengesteuerten Gruppenantennen (1105, 1105a, 1105b) subtraktiv verarbeitete Bahnen umfassen.

8. Roboter (102) nach Anspruch 1, wobei die phasengesteuerten Gruppenantennen (1105, 1105a, 1105b) ein Substrat (1141) umfassen.

9. Roboter (102) nach Anspruch 8, wobei das Substrat (1141) flexibel ist.

10. Roboter (102) nach Anspruch 1, wobei sich das Verarbeitungssystem (120) innerhalb des mobilen Roboterkörpers (106) befindet.

11. Roboter (102) nach Anspruch 1, wobei sich das Verarbeitungssystem (1107) außerhalb des mobilen Roboters (102) befindet.

12. Roboter (102) nach Anspruch 1, wobei die phasengesteuerten Gruppenantennen (1105, 1105a, 1105b) WIFI-Antennen umfassen.

13. Roboter (102) nach Anspruch 1, wobei die phasengesteuerten Gruppenantennen (1105, 1105a, 1105b) Bluetooth-Antennen umfassen.

14. Roboter (102) nach Anspruch 1, wobei die phasengesteuerten Gruppenantennen (1105, 1105a, 1105b) Zellularantennen umfassen.

15. Roboter (102) nach Anspruch 1, wobei der Roboterkörper (106) einen Mast mit einer Höhe von wenigstens 1 Meter umfasst.

## Revendications

1. Robot mobile autonome (102), comprenant :
un corps de robot mobile (106) ;
**caractérisé en ce que** le robot (102) comprend :
au moins deux antennes à réseau à éléments en phase (1105, 1105a, 1105b) associées au corps mobile (106), les antennes à réseau à éléments en phase (1105, 1105a, 1105b) permettant une communication sans fil entre des caractéristiques embarquées du robot mobile (102), y compris au moins un matériel de mobilité à proximité d'une base (106b) du corps de robot mobile (106), et des capteurs hors bord (1103) liés à au moins la navigation du matériel de mobilité ; et
un système de traitement (120, 1107) communiquant avec les caractéristiques embarquées et les capteurs hors bord (1103) par intercommunication via les au moins deux antennes à réseau à éléments en phase, et comprenant un code informatique non transitoire qui, lorsqu'il est exécuté par au moins un processeur associé au système de traitement (120, 1107), amène les étapes suivantes à être exécutées :
la navigation du robot mobile (102) le long d'un chemin prédéterminé, sous réserve d'éviter les obstacles, en actionnant sélectivement le matériel de mobilité ; et
l'exécution de protocoles de communication entre les caractéristiques embarquées et les capteurs hors bord (1103) via les antennes à réseau à éléments en phase (1105, 1105a, 1105b) pour permettre la navigation.

2. Robot (102) selon la revendication 1, le corps de robot mobile (106) comprenant un boîtier.

3. Robot (102) selon la revendication 1, l'association des antennes à réseau à éléments en phase (1105, 1105a, 1105b) comprenant l'association à l'intérieur du boîtier du corps de robot mobile.

4. Robot (102) selon la revendication 1, l'association des antennes à réseau à éléments en phase (1105, 1105a, 1105b) comprenant un boîtier sur une face extérieure du boîtier du corps de robot mobile.

5. Robot (102) selon la revendication 1, les capteurs hors bord (1103) comprenant des capteurs de balise.

6. Robot (102) selon la revendication 1, les antennes à réseau à éléments en phase (1105, 1105a, 1105b) comprenant des traces imprimées.

7. Robot (102) selon la revendication 1, les antennes à réseau à éléments en phase (1105, 1105a, 1105b) comprenant des traces traitées par soustraction.

8. Robot (102) selon la revendication 1, les antennes à réseau à éléments en phase (1105, 1105a, 1105b) comprenant un substrat (1141).

9. Robot (102) selon la revendication 8, le substrat (1141) étant flexible.

10. Robot (102) selon la revendication 1, le système de traitement (120) résidant dans le corps de robot mobile (106).

11. Robot (102) selon la revendication 1, le système de traitement (1107) résidant à l'extérieur du robot mobile (102).

12. Robot (102) selon la revendication 1, les antennes à réseau à éléments en phase (1105, 1105a, 1105b) comprenant des antennes WIFI.

13. Robot (102) selon la revendication 1, les antennes à réseau à éléments en phase (1105, 1105a, 1105b) comprenant des antennes Bluetooth.

14. Robot (102) selon la revendication 1, les antennes à réseau à éléments en phase (1105, 1105a, 1105b) comprenant des antennes cellulaires.

15. Robot (102) selon la revendication 1, le corps de robot (106) incluant un mât d'au moins 1 mètre de hauteur.
